# EUROPÄISCHE PATENTSCHRIFT

(11) **EP 0 743 996 B1**
(45) Veröffentlichungstag und Bekanntmachung des Hinweises auf die Patenterteilung: **10.09.1997**
(21) Anmeldenummer: 95915807.2
(22) Anmeldetag: 21.04.1995
(51) Int. Cl.: D21H 25/06, D21H 23/70, D21F 5/00

(54) **PAPIER-STREICHVORRICHTUNG**
PAPER COATING DEVICE
INSTALLATION POUR LE COUCHAGE DU PAPIER

(30) Priorität: 04.05.1994 DE 4415581
(43) Veröffentlichungstag der Anmeldung: 27.11.1996
(73) Patentinhaber: Voith Sulzer Papiermaschinen GmbH, 89509 Heidenheim (DE)
(72) Erfinder: REICH, Stefan, D-89522 Heidenheim (DE)
(74) Vertreter: Kohlmann, Karl Friedrich, Dipl.-Ing.
(86) Internationale Anmeldenummer: DE9500544
(87) Internationale Veröffentlichungsnummer: WO9530795

(56) Entgegenhaltungen:
- EP-A- 0 507 218
- DE-A- 4 008 804
- DE-A- 4 302 435
- DE-A- 4 302 437

## Beschreibung

Die Erfindung betrifft eine Papier-Streichvorrichtung nach dem Oberbegriff des Patentanspruchs 1.

Eine gattungsgemäße Vorrichtung ist aus der EP-A-O 507 218 bekannt. Dort ist eine Einrichtung zum Auftragen eines flüssigen Streichmediums auf eine laufende Papierbahn vorgesehen. In Bahndurchlaufrichtung ist dieser Auftragseinrichtung eine berührungslose Bahn-Umlenkeinrichtung nachgeschaltet, die die Papierbahn auf einem von Blasdüsen erzeugten Luftpolster umlenkt. Die Bahn-Umlenkeinrichtung ist bei Bedarf mit einer Heißluft-Bahntrocknungseinrichtung kombiniert. An die Bahn-Umlenkeinrichtung schließen sich Schwebetrocknungs- und Infrarot-Trocknungseinheiten an.

Bei dieser bekannten Konfiguration ist jedoch die maximal mögliche Arbeitsgeschwindigkeit eng begrenzt. Denn die berührungslose stationäre "Air-turn"-Bahnumlenkeinrichtung arbeitet mit einer Prall-Luftströmung, die die in der Auftragseinrichtung befeuchtete Bahn hoch beansprucht.

Eine weitere Vorrichtung ist aus der DE-A-34 02 435 bekannt. Auch im Voith-Druck p2771 ist eine Papierstreichvorrichtung in On-line-Anordnung beschrieben.

Danach ist eine Einrichtung zum Auftragen eines flüssigen Streichmediums auf eine laufende Papierbahn innerhalb der Trockenpartie einer Papierherstellungsmaschine angeordnet. In der Regel befindet sich diese Einrichtung zwischen zwei Trockengruppen, von denen jede mehrere Trockenzylinder mit der üblichen Trockensieb-(oder Trockenfilz-)Bespannung und einen herkömmlichen Antrieb aufweist. Die bekannte, wie auch die hier vorliegende erfindungsgemäße Streichvorrichtung kann ein Walzenpaar für einseitigen oder beidseitigen indirekten Auftrag eines flüssigen Streichmediums aufweisen oder eine einzelne Walze für direkten Auftrag des Streichmediums. Das Trocknen der bestrichenen Papierbahn erfolgt beim Stand der Technik entweder allein durch Kontakt-Trocknung mittels der nachfolgenden Trockenzylinder oder durch eine Kombination aus kontaktlosen (z.B. Infrarot-)Trocknern und Kontakt-Trockenzylindern.

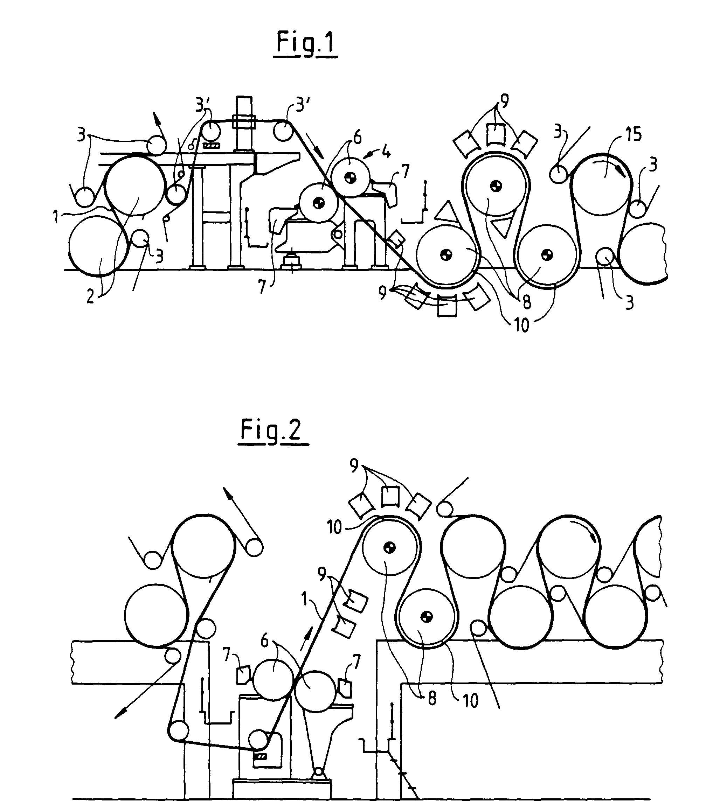

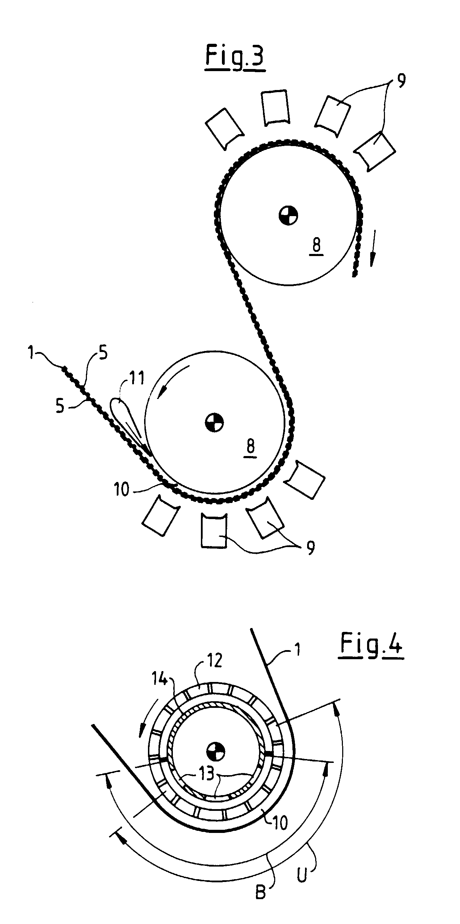

Nachteilig bei dem in Abbildung 2 des obengenannten Voith-Druckes dargestellten sogenannten "Speed-Sizer" ist, daß er nur zum Auftrag von pigmentfreien (leimartigen) Streichmedien geeignet ist, weil allein Kontakt-Trocknung vorgesehen ist. Bei den Abbildungen 3 bis 5 des obengenannten Voith-Druckes ist zwar das Auftragen von pigmenthaltigen Streichmedien (gleichzeitig auf beide Bahnseiten) möglich, wobei vor den Kontakt-Trocknern zusätzliche kontaktlose Trockner (z.B. Infrarot-Trockner) vorgesehen sind. Jedoch ist von der Auftragseinrichtung bis zum ersten Kontakt-Trockner eine sehr lange Bahnlaufstrecke mit scharfen Umlenkungen vorgesehen. Eine derartige Bahnführung ist für die heute geforderten sehr hohen Bahngeschwindigkeiten ungeeignet, wegen der damit verbundenen Gefahr von Bahnabrissen.

Allen zuvor erläuterten bekannten Anordnungen ist also gemeinsam, daß die maximal mögliche Arbeitsgeschwindigkeit eng begrenzt ist. Dies trifft sowohl auf die in Abbildung 5 des besagten Voith-Druckes gezeigte Streichvorrichtung zu, als auch auf die in der DE-A-34 02 435 und der EP-A-0 507 218 beschriebenen Streichvorrichtungen wegen der dort notwendigen berührungslosen stationären "Air-turn"-Bahnumlenkeinrichtungen, die mit Prall-Luftströmung arbeiten, welche die zuvor in der Auftragseinrichtung befeuchtete Bahn stark beansprucht.

Der Erfindung liegt die Aufgabe zugrunde, eine Papier-Streichvorrichtung zu schaffen, die für sehr hohe Arbeitsgeschwindigkeiten und insbesondere für das Auftragen von pigmenthaltigen Streichmedien, bei vorzugsweise gleichzeitigem beidseitigen Auftrag, geeignet ist.

Erfindungsgemäß wird diese Aufgabe von einer Papier-Streichvorrichtung mit den Merkmalen des Patentanspruches 1 gelöst.

Vorteilhafte Ausgestaltungen der Erfindung ergeben sich aus den Unteransprüchen.

Auf die Auftrag-Einrichtung folgt, in der Regel unmittelbar, wenigstens eine von der Bahn umschlungene rotierende Umlenk-walze, wobei jedoch die Anordnung derart getroffen ist, daß die Bahn am Umfang der Umlenkwalze auf einem mit der Bahn strömenden Luftpolster schwimmt, also den Walzenmantel nicht berührt.

Bei dieser Erfindung wird also die mit der Bahn einströmende Luft bewußt zur Erzeugung dieses Luftpolsters ausgenutzt. Dagegen soll bei einem in der US-PS 4,369,584 beschriebenen Apparat zum Streichen oder Drucken von Papier, die mit der Bahn eingeschleppte Luft strikt vermieden werden.

Gleichzeitig wird erfindungsgemäß die Bahn mittels wenigstens einer kontaktlosen Trocknungseinrichtung (z.B. IR-Trockner) so weit getrocknet, daß sie danach alsbald durch herkömmliche Kontakttrocknung fertig getrocknet werden kann.

Die erfindungsgemäße Umlenkwalze mit der an ihrem Umfang angeordneten kontaktlosen Trocknungseinrichtung könnte man kurz ein "rotierendes Airturn-Bahn-Leit- und Trocknungssystem" nennen, im Gegensatz zu der bekannten stationären Airturn-Bahnleitvorrichtung.

Die Erfindung ermöglicht es, eine Papierbahn (innerhalb der Papierherstellungsmaschine oder in einer separaten Streichanlage) bei beliebigen, auch bei sehr hohen Bahngeschwindigkeiten einseitig oder beidseitig mit beliebigen (auch mit pigmenthaltigen und/oder hochkonsistenten) Medien zu beschichten und unmittelbar danach zu trocknen.

Der Erfolg beruht hauptsächlich darauf, daß dank dem mit der Bahn strömenden Luftpolster (Vermeiden einer Prallströmung) am Umfang der Umlenkwalze eine außerordentlich ruhige und stabile Bahnführung erzielt wird. Diese ermöglicht es, daß kontaktlose (z.B. Infrarot-) Trockner gerade dort am Umfang der Umlenkwalze angeordnet werden können. Dadurch kann in vorteilhafter Weise der Bahnlaufweg von der Auftrageinrichtung bis zu der genannten Umlenkwalze relativ kurz und gerade ausgeführt werden, was ebenfalls zu einem stabilen Bahnlauf ohne Abriß-Gefahr beiträgt. Gleichzeitig wirkt die vorzugsweise glatte und hochglänzende Mantelfläche der Umlenkwalze als Reflektor für den bzw. die Infrarot-Trockner.

Die Erfindung ist realisierbar mit beliebigen Auf trageinrichtungen, d.h., sowohl mit solchen für direkten Auftrag als auch mit solchen für indirekten Auftrag des Streichmediums auf die Bahn. Die letztere Ausführung wird jedoch bevorzugt (Anspruch 10), weil sie ebenfalls zu einer stabilen, abrißarmen Bahnführung beiträgt. Mit anderen Worten: Der Laufwirkungsgrad (die "runability") wird noch weiter erhöht.

In der Zeichnung sind Ausführungsbeispiele der Erfindung schematisch dargestellt.

Es zeigen:
- Fig. 1:: einen Ausschnitt einer Papiermaschine mit der erfindungsgemäßen Papier-Streichvorrichtung, die zwischen zwei Trockengruppen innerhalb der Trockenpartie angeordnet ist, in der Seitenansicht
- Fig. 2:: den Ausschnitt einer Papiermaschine gemäß Fig. 1, aber mit veränderter Papierbahnführung
- Fig. 3:: zwei erfindungsgemäße Umlenkwalzen mit einer Luftdüse in der Seitenansicht
- Fig. 4:: die erfindungsgemäße Umlenkwalze, die als Luftblaswalze gestaltet ist im Querschnitt.

In den Fig. 1 und 2 ist erkennbar, daß eine Papierbahn 1 zunächst durch eine Vortrockenpartie läuft, wobei noch zwei Trockenzylinder 2 im Ausschnitt dargestellt sind. Die Papierbahn 1 wird dabei mittels endloser Anpreßbänder, die über Band-Leitwalzen 3 laufen, an die Trockenzylinder angedrückt.

Danach passiert die Papierbahn 1 (in Fig. 1 von oben nach unten, in Fig. 2 von unten nach oben laufend dargestellt) einige Papierleitwalzen 3 und eine Auftrag-Einrichtung 4 zum Auftragen eines flüssigen Streichmediums 5 auf die laufende Papierbahn 1 (welches in Fig. 3 gestrichelt gekennzeichnet ist) zur Verbesserung der Oberfläche des herzustellenden Papiers, wie z.B. durch Farbe oder Glanz.

Die Auftrag-Einrichtung 4 besteht aus einem Preßwalzenpaar 6, wobei die Preßwalzen mit einem eigenen Antrieb versehen sind und wie in den Fig. 1 und 2 zu sehen, aus zwei Zuführungen 7 für das indirekte Auftragen des gewünschten Streichmediums 5. Das Streichmedium 5 kann dabei mittels einem Düsenauftragswerk auf das Walzenpaar 6 aufgetragen werden. Das Streichmedium 5 kann aber auch mittels Dosierwalzen, die den Walzen oder auch nur einer Walze des Walzenpaares 6 vorgeschaltet sind, aufgetragen werden.

Der Auftrag kann allerdings auch direkt erfolgen. Dann braucht nur eine einzelne Walze 6 vorhanden sein, die in diesem Fall eine Stützwalze ist. Dabei ist es möglich, das Streichmedium auf eine Seite der Bahn in direkter Weise und auf die andere Bahnseite in indirekter Weise aufzutragen.

Auf die Auftrag-Einrichtung 4 folgen mindestens eine Umlenkwalze 8. Bei der in Fig. 1 dargestellten Variante sind drei Umlenkwalzen 8 mit einem eigenen Antrieb vorgesehen. Dagegen sind es bei der Variante gem. Fig. 2 und 3 nur zwei Umlenkwalzen 8.

Die Umfangsgeschwindigkeit einer Umlenkwalze 8 ist so eingestellt, daß sie gleich groß oder größer als die Bahngeschwindigkeit ist.

Der Durchmesser der Umlenkwalze 8 beträgt mindestens 1 m. Als besonders vorteilhaft haben sich Durchmesser von 1,2 bis 1,8 m in Abhängigkeit von der zu erreichenden Umfangsgeschwindigkeit herausgestellt.

Sowohl auf dem geraden Laufweg der Papierbahn 1, im Bereich von der Auftrag-Einrichtung 4 bis hin zur ersten Umlenkwalze 8, als auch auf die, sich um die Umlenkwalze 8 schlingende Papierbahn 1, strahlen von außen angeordnete kontaktlose Trocknungseinrichtungen 9.

Als Trocknungseinrichtungen wurden Infrarot-Trockner gewählt. Es wäre aber auch möglich, Gas- oder Elektrotrockner zu installieren.

Die Papierbahn 1 läuft mit einer Bahngeschwindigkeit von mindestens 1000 m/min um beide Umlenkwalzen 8, so daß an deren Umfang, also zwischen Papierbahn 1 und Umlenkwalzen 8 auf Grund der von der Bahn mitgerissenen Luftgrenzschicht ein Luftpolster 10 entsteht, welches die Papierbahn 1 mit dem Streichmedium 5 in diesem Bereich trägt.

Eine besonders intensive Herausbildung des Luftpolsters 10 hat sich bei Bahngeschwindigkeiten von ca. 1500 - 2000 m/min erwiesen.

Die Schaffung des sich mit der Umlenkwalze 8 bewegenden Luftpolsters 10 hat neben den bereits vorstehend beschriebenen Vorteilen noch den, daß ein "Belegen" der Walzen durch diesen sogenannten "Aufschwimmeffekt" verhindert wird.

Die Bildung des Luftpolsters 10 kann, wie in Fig. 3 dargestellt, durch eine Luftdüse 11 unterstützt werden. Das ist insbesondere dann sinnvoll, wenn die Bahngeschwindigkeit geringer als vorstehend angegeben ist, die Papiermaschine also langsamer läuft. Die Luftdüse 11 ermöglicht die Einblasung von Luft in den gewünschten Bereich zwischen Papierbahn 1 und Umlenkwalze 8 in einfacher Weise.

Eine weitere Variante zur Bildung des Luftpolsters 10 zeigt Fig. 4.

Hierbei ist die Umlenkwalze 8 als eine Luftblaswalze ausgebildet.

Sie weist einen perforierten Walzenmantel 12 sowie einen stationären, zur Umschlingungszone U hin mit Öffnungen 13 versehenen Blaskasten 14 auf.

Aus Fig. 4 ist außerdem ersichtlich, daß bei im Querschnitt gesehener Walze 8 bei der in Pfeilrichtung angegebenen Bahnlaufrichtung die Blaszone B vor der Umschlingungszone U beginnt und noch vor dieser endet. Damit wird verhindert, daß Leckluft nicht ungenutzt nach außen abströmt.

Bei allen drei beschriebenen Varianten der Erzeugung des Luftpolsters (also hohe Bahngeschwindigkeit, Luftdüse und Luftblaswalze) wird eine rotationsartige Luftströmung und keine radialen - sogenannten Prall-Strömungen wie bei bekannten "Airturn"-Einrichtungen erzeugt, wodurch die Papierbahn 1 im höchsten Maße geschont wird. Diese Eigenschaft ist besonders vorteilhaft bei der Behandlung der Papierbahn 1 mit einem pigmenthaltigen Streichmedium 5. Dadurch wird auch ermöglicht, daß gleichzeitig ein beidseitiger Auftrag erfolgen kann.

Im Anschluß an die kontaktlose Trocknung, die man auch als "Hochgeschwindigkeitstrocknung" bezeichnen kann, läuft die Papierbahn 1 in üblicher Weise in eine weitere Trocknungseinrichtung mit bekannten Kontakttrocknern 15, wobei die Papierbahn 1 auch hierbei wieder durch je ein oberes und unteres Anpreßband (geführt über Bandleitwalzen 3) an die Zylinder angedrückt wird.

## Patentansprüche

1. Papier-Streichvorrichtung,
umfassend eine Einrichtung zum Auftragen eines flüssigen Streichmediums auf eine laufende Papierbahn und eine Trocknungseinrichtung mit wenigstens einer Bahn-Umlenkeinrichtung, welche die Bahn berührungslos mittels eines Luftpolsters führt, wobei wenigstens eine kontaktlose Trocknungseinrichtung (9) im Bereich der Bahn-Umlenkeinrichtung (8) am Bahnlaufweg angeordnet ist,
**dadurch gekennzeichnet, daß**
a) die Bahn-Umlenkeinrichtung eine mit der Bahnlaufrichtung rotierende Umlenk-Walze (8) ist, und daß
b) Mittel vorgesehen sind, um das Luftpolster derart auszubilden, daß es zwischen der Bahn (1) und der Umlenk-Walze (8) in der Bahnlaufrichtung strömt.

2. Papier-Streichvorrichtung nach Anspruch 1, dadurch gekennzeichnet, daß das genannte Mittel darin besteht, das Luftpolster derart auszubilden, daß es zwischen der Bahn (1) und der Umlenkwalze (8) wenigstens angenähert mit der Bahngeschwindigkeit strömt.

3. Papier-Streichvorrichtung nach Anspruch 1 und 2, dadurch gekennzeichnet, daß das genannte Mittel darin besteht, die Bahngeschwindigkeit auf mindestens 1000 m/min, vorzugsweise auf 1500 - 2000 m/min einzustellen, so daß die von der Bahn (1) mitgeführte Luftgrenzschicht das genannte Luftpolster (10) erzeugt.

4. Papier-Streichvorrichtung nach Anspruch 1 oder 2, dadurch gekennzeichnet, daß man die Umfangsgeschwindigkeit der Umlenkwalze (8) auf einen Wert einstellt, der gleich groß wie oder größer als die Bahngeschwindigkeit ist.

5. Papier-Streichvorrichtung nach Anspruch 1, 2 oder 3, dadurch gekennzeichnet, daß der Durchmesser der Umlenkwalze (8) mindestens 1 m, vorzugsweise 1,2 - 1,8 m beträgt.

6. Papier-Streichvorrichtung nach Anspruch 1, dadurch gekennzeichnet, daß das genannte Mittel darin besteht, an der Bahn-Zulaufseite der Umlenkwalze (8) eine Luftdüse (11) anzuordnen, die zwischen Bahn (1) und Umlenk-walze (8) das mit der Bahn strömende Luftpolster (10) erzeugt.

7. Papier-Streichvorrichtung nach Anspruch 1, dadurch gekennzeichnet, daß das genannte Mittel darin besteht, daß die Umlenkwalze (8) als eine Luftblaswalze derart ausgebildet ist, indem sie einen perforierten Walzenmantel (12) und vorzugsweise einen stationären, zur Umschlingungszone (U) hin offenen, eine Blaszone (B) bildenden Blaskasten (14) aufweist.

8. Papier-Streichvorrichtung nach Anspruch 6, dadurch gekennzeichnet, daß die Blaszone (B), im Querschnitt durch die Umlenkwalze (8) gesehen, bezüglich der Bahnlaufrichtung vor dem Anfang der Umschlingungszone U beginnt und vor dem Ende der Umschlingungszone endet.

9. Papier-Streichvorrichtung nach einem der Ansprüche 1 bis 7, dadurch gekennzeichnet, daß der Bahnlaufweg von der Auftrag-Einrichtung (4) zur Umlenkwalze (8) gerade ist.

10. Papier-Streichvorrichtung nach einem der Ansprüche 1 bis 8, dadurch gekennzeichnet, daß an dem Bahnlaufweg von der Auftrag-Einrichtung (4) zur Umlenkwalze (8) wenigstens eine zusätzliche kontaktlose Trocknungseinrichtung (9) vorgesehen ist.

11. Papier-Streichvorrichtung nach einem der Ansprüche 1 bis 9, dadurch gekennzeichnet, daß die Auftrag-Einrichtung ein Preßwalzenpaar (6) und eine (oder zwei) Streichmedium-Zuführung(en) (7) hat, für indirekten Auftrag des Streichmediums (5) auf die Bahn (1).

## Claims

1. A paper coating device,
comprising an apparatus for applying a liquid coating medium onto a moving paper web and a drying apparatus having at least one web deflecting device, which guides the web without contact by means of an air cushion, with at least one contact-free drying device (9) being disposed in the region of the web deflecting device (8) on the web path,
**characterised in that**
a) the web deflecting device is a deflector roll (8) rotating with the direction of movement of the web,
**and in that**
b) means are provided to construct the air cushion in such a manner that it flows between the web (1) and the deflector roll (8) in the direction of movement of the web.

2. A paper coating device according to Claim 1,
**characterised in that** the said means consist in constructing the air cushion in such a manner that it flows between the web (1) and the deflector roll (8) at least approximately at the web velocity.

3. A paper coating device according to Claim 1 and 2,
**characterised in that** the said means consists in setting the web velocity at at least 1000 m/min, preferably at 1500 - 2000 m/min, so that the boundary layer of entrained by the web (1) produces the mentioned air cushion (10).

4. A paper coating device according to Claim 1 or 2,
**characterised in that** the peripheral velocity of the deflector roll (8) is set at a value which is the same as or greater than the web velocity.

5. A paper coating device according to Claim 1, 2 or 3,
**characterised in that** the diameter of the deflector roll (8) is at least 1 m, preferably 1.2 - 1.8 m.

6. A paper coating device according to Claim 1,
**characterised in that** the said means consist in disposing an air jet (11), which produces the air cushion (10) flowing with the web between web (1) and deflector roll (8), at the web inlet side of the deflector roll (8).

7. A paper coating device according to Claim 1,
**characterised in that** the said means consist in that the deflector roll (8) is constructed as an air blast roll by it having a perforated roll surface (12) and preferably a stationary blast box (14) which is open to the winding zone (U) and forms a blast zone (B).

8. A paper coating device according to Claim 6,
**characterised in that** the blasting zone (B), seen in cross section through the deflector roll (8), begins before the start of the winding zone U and ends before the end of the winding zone, with respect to the direction of movement of the web.

9. A paper coating device according to one of Claims 1 to 7,
**characterised in that** the web path from the application device (4) to the deflector roll (8) is straight.

10. A paper coating device according to one of Claims 1 to 8,
**characterised in that** at least one additional contact-free drying device (9) is provided on the web path from the application device (4) to the deflector roll (8).

11. A paper coating device according to one of Claims 1 to 9,
**characterised in that** the application device has a pair of press rolls (6) and one (or two) coating medium supply lines (7), for indirect application of the coating medium (5) onto the web (1).

## Revendications

1. Installation de couchage de papier comprenant :
une installation pour appliquer un milieu de couchage liquide sur une bande de papier qui défile et une installation de séchage ayant au moins une installation de déviation de la bande qui conduit la bande sans contact par un coussin d'air, au moins une installation de séchage sans contact (9) étant prévue au niveau de l'installation de renvoi de bande (8) sur le trajet de la bande,
caractérisée en ce que
• l'installation de renvoi de bande est un cylindre de renvoi (8) tournant dans le sens de circulation de la bande et,
• des moyens forment le coussin d'air qui s'écoule entre la bande (1) et le cylindre de renvoi (8) dans la direction de circulation de la bande.

2. Installation de couchage de papier selon la revendication 1,
caractérisée en ce que
les moyens consistent à former le coussin d'air pour que le coussin s'écoule entre la bande (1) et le cylindre de renvoi (8) au moins approximativement à la vitesse de défilement de la bande.

3. Installation de couchage de papier selon les revendications 1 et 2,
caractérisée en ce que
les moyens consistent à régler la vitesse de la bande à au moins 1000 m/min. et de préférence entre 1500 et 2000 m/min. pour que la couche d'air limite entraînée par la bande (1) génère le coussin d'air (10).

4. Installation de couchage de papier selon la revendication 1 ou 2,
caractérisée en ce que
la vitesse périphérique du cylindre de renvoi (8) est réglée à une valeur égale ou supérieure à la vitesse de la bande.

5. Installation de couchage de papier selon les revendications 1, 2, 3,
caractérisée en ce que
le diamètre du cylindre de renvoi (8) est au moins égal à 1 m et de préférence compris entre 1,2 et 1,8 m.

6. Installation de couchage de papier selon la revendication 1,
caractérisée en ce que
le moyen consiste à associer une buse d'air (11) au côté d'arrivée de la bande sur le cylindre, de renvoi (8), buse qui génère le coussin d'air (10) circulant avec la bande, entre le bande (1) et le cylindre de renvoi (8).

7. Installation de couchage de papier selon la revendication 1,
caractérisée en ce que
le moyen consiste à réaliser le cylindre de renvoi (8) sous la forme d'un cylindre de soufflage d'air avec une enveloppe (12) perforée et de préférence un caisson de soufflage (14) stationnaire, ouvert en direction de la zone d'enveloppement (U) et formant une zone de soufflages (B).

8. Installation de couchage de papier selon la revendication 6,
caractérisée en ce que
la zone de soufflage (B), vue en coupe transversale pour le cylindre de renvoi (8), commence en amont du début de la zone d'enveloppement (8) dans le sens de circulation de la bande et se terminé avant la fin de la zone d'enveloppement.

9. Installation de couchage de papier selon l'une des revendications 1 à 7,
caractérisée en ce que
le trajet de la bande est rectiligne entre l'installation de couchage (4) et le cylindre de renvoi (8).

10. Installation de couchage de papier selon l'une des revendications 1 à 8,
caractérisée par
au moins une installation de séchage sans contact (9), supplémentaire sur le trajet de la bande entre l'installation de couchage (4) et le cylindre de renvoi (8).

11. Installation de couchage de papier selon l'une des revendications 1 à 9,
caractérisée en ce que
l'installation de couchage comporte une paire de cylindres de pression (6) et une (ou deux) d'alimentation en milieu de couchage (7) pour l'application indirecte du milieu de couchage (5) sur la bande (1).
